# EUROPEAN PATENT APPLICATION

(11) **EP 1 486 417 A1**
(43) Date of publication of application: **15.12.2004**
(21) Application number: 04253456.0
(22) Date of filing: 10.06.2004
(51) Int. Cl.: B64D 15/12

(54) **A heated aerofoil**

(30) Priority: 14.06.2003 GB 0313875
(71) Applicant: PANAGHE, Stylianos, Knutsford, Cheshire WA16 8TW (GB)
(72) Inventor: PANAGHE, Stylianos, Knutsford, Cheshire WA16 8TW (GB)
(74) Representative: Harrison Goddard Foote

(57) **Abstract**

A heated aerofoil such as an aircraft wing, or windmill blade or fan blade, having, close to a leading edge of the aerofoil a heating element embedded in the curved outer surface of the aerofoil and applied by printed element technology such that a conductive element (12) is disposed between ceramic dielectric layers (7, 9) coated on a substrate (6) and produced by sequential printing and firing of the materials.

## Description

THIS INVENTION concerns aerofoils and particularly, though not exclusively, an aerofoil in the form of an aircraft wing or windmill blade or fan blade.

Such aerofoils are often utilised in conditions where the ambient temperature can be below 0°C where there is the risk of a build up of ice on the aerofoil surface thus reducing its efficiency to such an extent as to endanger the integrity of the aerofoil and thus the aircraft or other structure to which it is attached.

Aerofoil technology can involve the movement of the aerofoil through the air or other fluid medium, or alternatively the movement of a stream of air or other fluid across the aerofoil body to provide motive power thereto.

Prevention of ice build-up on aircraft wings has been afforded conventionally by surface coatings which are effective on the aerofoil surfaces while the aircraft is stationery and taxiing in freezing conditions, and in some cases by a direct bleed of hot air onto the surfaces from the aircraft engines.

To provide an electrically heated element on the outer curved surface of an aerofoil body would seriously disrupt its interactive performance with the air or other fluid medium and so the prospect of attaching a heating element to these surfaces is not acceptable.

An object of the present invention is to provide a system for electrically heating aerofoil surfaces without disruption of the aerofoil properties thereof.

According to the present invention an aerofoil having at least one curved outer surface has at least one electrically heated element disposed so as to elevate the temperature of the curved outer surface above ambient temperature; characterised in that the element is disposed on the aerofoil thus to be at or beneath the curved outer surface thereof to prevent disruption of a fluid medium passing over the curved outer surface.

The aerofoil may be formed with two curved outer surfaces, one convex, the other concave.

The electrically heated element may be disposed to elevate the temperature of the convex surface.

The electrically heated element may be disposed to elevate the temperature of the concave surface.

Such electrically heated elements may be disposed to elevate the temperature of both curved outer surfaces.

The electrically heated element may be disposed at or close to a leading edge of the aerofoil in the sense of its interaction with the fluid medium.

The electrically heated element may be formed by printed element technology.

The electrically heated element may be embedded within the aerofoil to lie beneath the outer curved surface or surfaces thereof.

The electrically heated element may be disposed on a face of the aerofoil opposed to the curved outer surface.

The electrically heated element may comprise a printed electrical conductor sandwiched between two layers of a ceramic dielectric material and coated onto a stainless steel substrate.

The substrate may be formed as a skin of the aerofoil.

An embodiment of the invention will now be described, by way of example only, with reference to the accompanying drawings, in which:-
Fig. 1 is a schematic view of an aerofoil section, for example of an aircraft wing;
and Fig. 2 is an enlarged section through an electrically heated element disposed at or beneath the outer curved surface of the aerofoil.

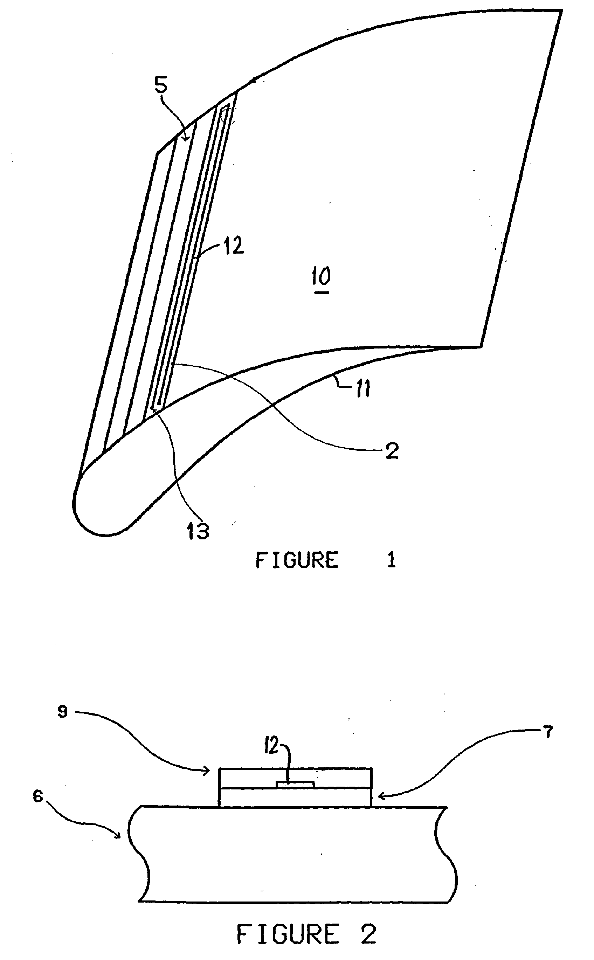

In Fig. 1 there is shown an aerofoil having upper and lower curved surfaces 10 and 11 respectively, and in accordance with the invention the leading edge region of the upper curved surface 10 is provided with a number of parallel strips 2 containing embedded heating circuitry to maintain the surface 10 at a temperature at which freezing is avoided.

Each track 2 contains a heating element 12 with terminal ends 13 for connection to an electrical power supply.

Referring to Fig. 2, each heating element 12 is preferably located between ceramic layers 7 and 9 for protection with the ceramic layer 7 printed onto a stainless steel substrate 6. Printed element technology is known per se in order to produce a very thin laminate heating track where the stainless steel substrate 6 may be attached to or serve as the surface to be heated, in this case the curved surface of the aerofoil.

Each heating track 2 is disposed on or beneath the curved surface 10 thus to avoid disturbing or disrupting the aerodynamic properties of the surface and thus creating drag. Thus, the track 2 may be embedded beneath the surface 10, or formed as a skin of the aerofoil, or located on the underside of the skin.

The heating tracks 2 may be provided flush with or beneath the curved surfaces of the aerofoil at any position where the temperature of the skin of the aerofoil must be maintained sufficiently high to avoid freezing, and this will depend upon the particular application to which the aerofoil is put, and the material of the aerofoil skin or surface as well as the nature and prevailing conditions of the air or other fluid medium which is to pass over the surfaces of the aerofoil.

In accordance with the usual requirements of printed element technology, the ceramic layers 7 and 9 must be chosen to be compliant with the properties of the substrate 6 in terms of the respective coefficients of thermal expansion. A glass ceramic mixture is particularly suitable since it can be deposited as a glass using a process similar to that of laying enamel, and is then de-vitrified thus becoming crystalline and hence refractory, the critical factors in substrate fabrication being the heating and cooling profiles. The substrate 6 must comply with the fired components so that they adhere securely to the stainless steel substrate surface.

The fabrication of the substrate may be carried out by printing and firing in a furnace at around 900°C. This may be conducted by three print and fire sequences in order to achieve the voltage safety requirements by minimising surface defects in the ceramic outer layer. The element 12 is printed and fired at the same temperature after which the insulating layer 9 is printed and fired again at the same temperature with the thickness of the overall substrate with the element and protective layers thereon being from less than 1mm to in excess of 10mm. Typically the steel substrate 6 will be of a thickness between 0.4mm and 10mm, while the ceramic layers 7 and 9 will be around 40µm thick and the element 12 in the region of 6-15µm in thickness. During the printing and firing process the substrate 6 may be maintained flat to prevent warping. The finished heating element can be powered at around 27 to 30 watts per cm² in free convection.

The printed heating elements located at or beneath the respective curved surface of the aerofoil may be applied also in the manufacture of fan blades, for example turbine fan blades, or the blades of wind generators of the like whose efficiency will deteriorate if ice is allowed to build-up on the aerofoil surfaces. In the case of such a device the power supply to the heating elements may be by conventional rotary connectors incorporating slip rings coupled onto the rotor shaft. In the case of a wind generator blade the speed of rotation of the rotor and the ambient temperature will determine the maximum electrical power required to maintain the aerofoil surfaces at a temperature to prevent freezing.

The provision of heating elements at or beneath the curved surfaces of an aerofoil enable the aerofoil surfaces to be heated without any disturbance or disruption of the air flow in operation, thus avoiding the need for the application of freeze prevention substances, or the bleeding of hot air over the surfaces in use. Conventional, non-printed element heaters are bulky and can only ever be applied to inner surfaces of an aerofoil over which the fluid medium does not flow. The printed element heater, on the other hand, is of sufficiently reduced thickness to be embedded within the outer surface thus, if required, to lie flush with the outer surface and thus be most effective where heating is required.

## Claims

1. An aerofoil having at least one curved outer surface (10, 11) and at least one electrically heated element (12) disposed so as to elevate the temperature of the curved outer surface (10, 11) above ambient temperature;
**characterised in that** the element (12) is disposed on the aerofoil thus to be at or beneath the curved outer surface thereof to prevent disruption of a fluid medium passing over the curved outer surface.

2. An aerofoil according to Claim 1, formed with two curved outer surfaces (10, 11), one convex, the other concave.

3. An aerofoil according to Claim 2, wherein the electrically heated element (12) is disposed to elevate the temperature of the convex surface (11).

4. An aerofoil according to Claim 2, wherein the electrically heated element (12) is disposed to elevate the temperature of the concave surface (11).

5. An aerofoil according to Claim 2, wherein electrically heated elements are disposed to elevate the temperature of both curved surfaces (10, 11) respectively.

6. An aerofoil according to any preceding claim, wherein the electrically heated element (12) is disposed at or close to a leading edge of the aerofoil in the sense of its interaction with the fluid medium.

7. An aerofoil according to any preceding claim, wherein the electrically heated element (12) is formed by printed element technology.

8. An aerofoil according to any preceding claim, wherein the electrically heated element (12) is embedded within the aerofoil to lie beneath the curved outer surface or surfaces (10, 11) thereof.

9. An aerofoil according to any preceding claim, wherein the electrically heated element (12) is disposed on a face of the aerofoil opposed to the curved outer surface or surfaces (10, 11) thereof.

10. An aerofoil according to any preceding claim, wherein the electrically heated element (12) comprises a printed electrical conductor sandwiched between two layers (7, 9) of a ceramic dielectric material, and coated onto a stainless steel substrate (6).

11. An aerofoil according to Claim 10, wherein the substrate (6) is formed as a skin of the aerofoil.
